# EUROPEAN PATENT SPECIFICATION

(11) **EP 1 274 870 B1**
(45) Date of publication and mention of the grant of the patent: **19.01.2005**
(21) Application number: 01919698.9
(22) Date of filing: 11.04.2001
(51) Int. Cl.: C22B 34/30, C22B 5/06, C21C 5/52

(54) **FERROALLOY PRODUCTION**
HERSTELLUNG EINER FERROLEGIERUNG
PRODUCTION DE FERRO-ALLIAGES

(30) Priority: 19.04.2000 GB 0009630; 26.07.2000 GB 0018354; 23.10.2000 GB 0025883
(43) Date of publication of application: 15.01.2003
(73) Proprietor: Maxred (Proprietary) Limited, Parktown, 2193 (ZA)
(72) Inventor: DEMIR, Orhan, Forest Town 2193 (ZA)
(74) Representative: Bannerman, David Gardner
(86) International application number: PCT/IB2001/000594
(87) International publication number: WO 2001/079572

(56) References cited:
- US-A- 3 158 464
- US-A- 4 053 307
- WEBER, P. ET AL: "The reduction mechanism of chromite in the presence of a silica flux" METALL. TRANS. B (1993), 24B(6), 987-95 , XP002171971
- WEBER, P. ET AL: "Solid-state fluxed reduction of LG-6 chromite from the Bushveld Complex" SYMP. SER. - S. AFR. INST. MIN. METALL. (1992), S11(INFACON 6, VOL. 1), 71-7 , XP002171972
- DEMIR, ORHAN ET AL: "Reduction of chromite in liquid Fe-Cr-C-Si alloys" METALL. MATER. TRANS. B (1994), 25B(4), 549-59 , XP002171973

## Description

### BACKGROUND OF THE INVENTION

This invention relates to ferrochrome alloy production.

Ferrochrome alloy is produced by smelting a chromium ore or concentrate in the presence of one or more fluxing agents and a carbon reductant in DC arc or AC submerged arc furnace. Most of the chromium and iron together with some silicon and carbon report in the metal phase known as ferrochrome alloy. However, in all known processes, a substantial amount of chromium reports in the slag phase. It is reported in the literature that most of the chromium which is lost to the slag in the production of ferrochrome alloy is in the form of unreacted or partially reacted chrome ore.

The reductant which is used in smelting chromium ore or concentrate is carbon in the form of coke, coal, char anthracite or the like. Although the amount of carbon reductant which is used can be increased to increase the chromium recovery, this is achieved at the expense of higher silicon contents in the ferrochrome alloy. Silicon as an oxide is present in most chromium ore and is also added, in oxide form, as a fluxing agent.

In a disclosure by P. Weber and R.H. Eric, "The reduction mechanism of chromite in the presence of silica flux", 2207 b, Met. Trans. B, 24 B, 1993, PP. 987 to 995, the reduction behaviour of chromite by graphite in the presence of silica is studied.

### SUMMARY OF THE INVENTION

The process for producing a ferrochrome alloy according to the invention is given in the claims.

The material will generally be an ore or concentrate. However, the invention also has application to slags and similar materials which contain both chromium and iron as oxides. Chromium and iron may be present in the material in other forms, e.g. as metal, but some, and generally most, of the chromium and iron will be present as oxides. The invention thus has application both to high quality ores and poor quality ores.

Essential to the invention is the use of a reductant which is a carbide alone or a carbide in combination with another reductant. It has been found that the use of such a reductant enables a ferrochromium alloy to be produced which has no more than 6% by mass silicon and a high chromium recovery of at least 70% by mass. The source of silicon, an unwanted material in the ferrochrome alloy, is the source material itself and/or as a fluxing agent.

Examples of other reductants are coke, coal, anthracite, pitch, tar, carbon-containing paste, natural gas, hydrogen, methane and butane.

In one preferred form of the invention, the reductant comprises a combination of a carbide and a carbon reductant. Carbon reductants tend to introduce sulphur and phosphorus into the ferrochrome alloy and thus it is possible, with the process of the invention, to produce ferrochrome alloys of low sulphur and phosphorus content.

Examples of suitable carbides are silicon carbide, calcium carbide, magnesium carbide and aluminium carbide. A mixture of carbides may be used. Further, other reductants such as nitrides may also be present.

The carbide will preferably be silicon carbide. The silicon carbide may take the form of a silicon carbide coating around a carbon core.

In the smelting of the material, the silicon carbide acts as a reductant and in so doing is oxidised to silicon dioxide. The silicon dioxide reports in the slag phase and has the effect of reducing the liquidus temperature of the slag and also of changing the basicity of the slag and/or the chemistry of the slag. The liquidus temperature of the slag is the temperature at which the slag becomes liquid. The lowering of the liquidus temperature of the slag and/or changing the chemistry or basicity of the slag can result in loss of chromium, particularly when the smelting is carried out in an AC submerged arc furnace. The reduction reactions occur primarily in the slag phase and any lowering of the liquidus temperature of the slag phase and change in the chemistry or basicity of the slag can result in chromium oxide values passing through the furnace unreduced. Thus, when silicon carbide alone is used as the reductant, it is preferred that an additional fluxing agent is present during smelting. Typically the fluxing agent, which may be a combination of agents, will be selected to ensure that the slag liquidus temperature is about 80 to 150° above the ferrochrome alloy liquidus temperature. The fluxes will also change the basicity of the slag or slag chemistry and may be selected to bring the basicity within a desired range. Examples of suitable fluxes are MgO, CaO, Al₂O₃ or SiO₂ which may take the form of lime, limestone, dolomite, magnesite, bauxite or quartzite and the carbides and nitrides of calcium, magnesium and aluminium.

When the reductant contains a combination of silicon carbide and a carbon reductant, the amount of silicon carbide in the combination may be as low, e.g. 0,5 percent by mass, but will generally be at least 5 percent by mass. As pointed out above, the silicon carbide, during reduction of the oxides in the material, is converted to silicon dioxide. The silicon dioxide is, in turn, reduced or have a tendency to be reduced, to silicon in the presence of a carbon reductant. That silicon will report in the ferrochrome alloy. To avoid too high a silicon content in the ferrochrome alloy, the mass ratio of silicon carbide to carbon reductant should be chosen to ensure that the ferrochrome alloy contains no more than 6%, and generally no more than 4%, and preferably no more than 2%, by mass of silicon. Factors which are taken into account in achieving this are not only the mass ratio of silicon carbide to carbon reductant, but also the nature of the material being smelted and the presence and nature of fluxing agents.

The reductant may be added to the material prior to introduction of the material to a smelting zone, or in the smelting zone. The smelting zone will typically be in a furnace which may be an AC submerged or semi-submerged arc furnace, a DC arc furnace or a kiln.

The process of the invention achieves higher chromium recoveries than has been achievable with prior art processes using carbon as the reductant. In particular, when using AC submerged or semi-submerged arc furnaces, the prior art processes have not been able to achieve chromium recovery of more than 80% by mass. The process of the invention using such furnaces achieves chromium recoveries in excess of 80% by mass. When a DC arc furnace is used, prior art processes have achieved chromium recoveries of more than 80% by mass. However, the process of the invention, when using a DC arc furnace, has been shown to achieve chromium recoveries in excess of 90% by mass.

The carbon reductant may be coke, coal, char, anthracite or the like. These carbon reductants tend to introduce sulphur and phosphorus into the system resulting in a relatively high sulphur and phosphorus content in the metal phase, in prior art processes. Since the carbon reductant in the process of the present invention is replaced partially or wholly by a carbide, it is possible now to produce ferroalloys of very low sulphur and phosphorus content. Further, poor quality and relatively inexpensive carbon reductants such as coal can be used to a greater extent.

When a combination of silicon carbide and carbon reductant is used it has been found that there is a significant increase in the amount of chromium which reports in the metal phase, the chromium losses to the slag phase and elsewhere are reduced, increased chromium recoveries with decreased specific energy consumption of metal are achieved, the furnace capacity because of the decrease in the amount of electrical energy required to drive the smelting operation is increased and the required electrical energy due to the exothermic nature of the reduction reaction between the carbide and the reducible oxides in the ore is decreased.

Because of the decrease in the electrical energy requirement the furnace throughput can be increased at the normal power input. The increase in the furnace throughput results in a decrease in the heat losses per ton of alloy produced. Furthermore, the off-gas volumes per ton of alloy produced is also decreased, as a result of silicon oxide produced by the reduction reaction of silicon from SiC with the reducible oxides in the ore and slag being retained in the slag.

According to another aspect of the invention, there is provided a process of producing a ferrochrome alloy which includes the steps of providing a material containing chromium and iron as oxides and smelting the material in the presence of a reductant comprising a combination of a carbide and a carbon reductant. The carbide may be any carbide described above, but is preferably silicon carbide. The mass ratio of silicon carbide to carbon reductant is chosen to produce a ferrochrome alloy which contains no more than 6 percent by mass silicon and a chromium recovery from the material of at least 70 percent by mass.

Preferably silicon carbide, is used as a reductant in reducing chromium oxide values present in a slag to chromium. The chromium will report in a metal phase which may contain a high content of chromium.

### DESCRIPTION OF EMBODIMENTS

The material which is to be smelted will generally first be classified or identified according to its ore type and slag properties such as basicity or liquidus temperature of the slag. The amount of reductant used and the relative amounts of carbide and carbon reductant, when a combination is used, will be affected by the type and nature of the material being smelted.

In one form of the invention, silicon carbide is used in a stoichiometric amount with respect to a desired SiO₂ content in the slag. The amount of carbon in the form of coke, for example, will be reduced by the equivalent amount of added SiC. SiO₂ addition in the form of quartzite or quartz sand, for example, would be eliminated completely, due to the silicon carbide being added in stoichiometric amount to form a desired amount of SiO₂ in the slag.

In an alternative form of the invention, with reference to a desired SiO₂ content in the slag, a stoichiometric excess of silicon carbide is used. In this form of the invention, in order to alleviate an excess silicon dioxide in the slag, it is necessary to add an additional flux, chemical agent or compound with the necessary properties to maintain a desired slag basicity and liquidus temperature. The flux/chemical agent/compound may be the carriers of CaO, MgO or Al₂O₃ such as lime, lime stone, dolomite, magnesite and bauxite, or the carbides or the nitrides of calcium, magnesium and aluminium. The excess SiO₂ in the slag is produced by the silicon in the excess silicon carbide reacting with the oxides of chromium, iron and other minor reducible oxides in the source material. In this form of the invention, when the basic oxides are used to neutralise the excess SiO₂ in the slag, the decrease in specific energy consumption (MWh/Ton of Metal) would be penalised by the amount of energy required for smelting and the dissolution of the oxides, e.g. CaO, MgO and Al₂O₃ in lime, dolomite, magnesite or bauxite. If the carbides of for example Ca, Al and Mg are used to alleviate the effect of excess SiO₂ from the excess SiC, then the specific energy consumption would be decreased even further than would be the case with SiC alone. The reason for this is that the reactions of Ca, Al and Mg carbides with the oxides of the ore are highly exothermic.

In yet another form of the invention, with reference to a desired content of SiO₂ in the slag, a sub-stoichiometric amount of SiC is used. In this case the desired SiO₂ percentage in the slag would be achieved by adding the necessary amount of quartzite or quartz sand. Again the carbon reductants would be decreased in proportion to the carbon equivalent of the SiC used.

The invention will now be illustrated with reference to a number of examples.

A series of pilot scale test runs was conducted using coke and SiC, separately and in combination, as reductant. The raw materials used, procedure followed and the results obtained are set out below.

### Raw Materials

A concentrate and UG-2 ore with -1 mm particle size were used, as set out in Table 1.

**Table 1:**

| **Ore Constituents** | | | | | | | |
|---|---|---|---|---|---|---|---|
| Ore | Cr₂O₃ | FeO | SiO₂ | Al₂O₃ | MgO | CaO | Cr/Fe |
| Concentrate | 42.58 | 24.67 | 5.23 | 14.2 | 10.8 | 0.6 | 1.52 |
| UG-2 | 38.8 | 25.7 | 7.2 | 14.8 | 11.8 | 0.56 | 1.33 |

The SiC used was 1-3 mm grit consistency with 96% purity. Fine coke (-6 mm) containing 82% dry fixed carbon was used. In two tests, an old SiC crucible from the scrap yard was crushed to -20 mm and used as the reductant.

### Experimental Set-Up Procedure

The smelting unit was a 150 KVA DC plasma furnace. The furnace utilized a single graphite electrode of 56 mm diameter suspended on hydraulics and a bottom anode made of graphite with a diameter of 100 mm. The power input and the arc length could be adjusted by lowering or raising the electrode with the hydraulic system.

The furnace crucible was lined with chrome-magnesite spinel bricks on the sidewalls and a magnesite spinel ramming material at the bottom. The furnace shell was water cooled by making use of a zigzag water channel welded on the steel shell. The anode was also cooled with water by means of a copper pipe welded on the copper block at the bottom of the anode.

The furnace was started up by a blank mixture and kept running at about 40-50 kW for about 8 hours for heating up the refractories. The first tap in each campaign was discarded.

After the first heat up run, the feed mixture was charged to the furnace every 5 minutes at a predetermined rate to finish feeding in 3 to 4 hours. The feeding of the furnace was finished 1 hour before the melt was tapped into a refractory crucible. The total energy input to the furnace was monitored by recording the volts and current every 5 to 30 minutes and by calculating the heat losses from the cooling water temperatures and the furnace shell and roof temperatures, which was monitored throughout the experiments. The furnace shell and roof temperatures were measured by using an optical pyrometer.

### Results

The slag and metal after solidifying were weighed and broken into smaller pieces and samples of approximately 2 kg and bigger were separated and sent for chemical analysis in three different laboratories that are acknowledged in the industry. Some samples were split and sent to all three labs independently to confirm the analysis.

The experimental data, as set out in Table 2 below, illustrates the effect of SiC use on the specific consumption of electrical energy, Cr losses in slag and the amount of metal tapped from each run at different levels of the total reductant as percentage of ore.

From Table 2, it is evident that when no SiC is present in the reductant mix at C additions of 20,2 to 21,7 percent by weight of ore (concentrate), the slag contains 9,1 to 11,7 percent Cr₂O₃ (Runs 1-3). Whereas, when SiC is present in the reductant mixture, at total reductant additions of 19,9 to 23,6 percent by weight of ore, the slag Cr₂O₃ content decreases to 1,3 - 2,4 percent (Runs 4-7). In the presence of SiC in the reductant mixture, the total reductant is the carbon equivalent of SiC and C in the mixture. In Runs 4 to 7, the ratio of SiC units to C units from coke is in the range 0,149 to 0,301.

A considerable decrease in the required electrical energy is also achieved when SiC is added into the reductant mixture. When no SiC is present, the specific electrical energy consumption changes between 3.81 to 4.14 MWh/t of alloy (Runs 1-3). When SiC is present, the specific electrical energy consumption is in the range 2,8 and 3,06 MWh/t of metal (Runs 4-7). This corresponds to approximately 20 to 32 percent saving in the electrical energy consumption per ton of alloy produced.

Two experiments were conducted to test the effect of SiC on the smelting of UG-2 ore. In experiments 8 and 9, with and without SiC, the slag Cr₂O₃ content is 13,4 and 4,2 percent respectively. This is achieved by 15,3 percent improvement in the Cr recoveries from 79,3 percent to 94,6 percent.

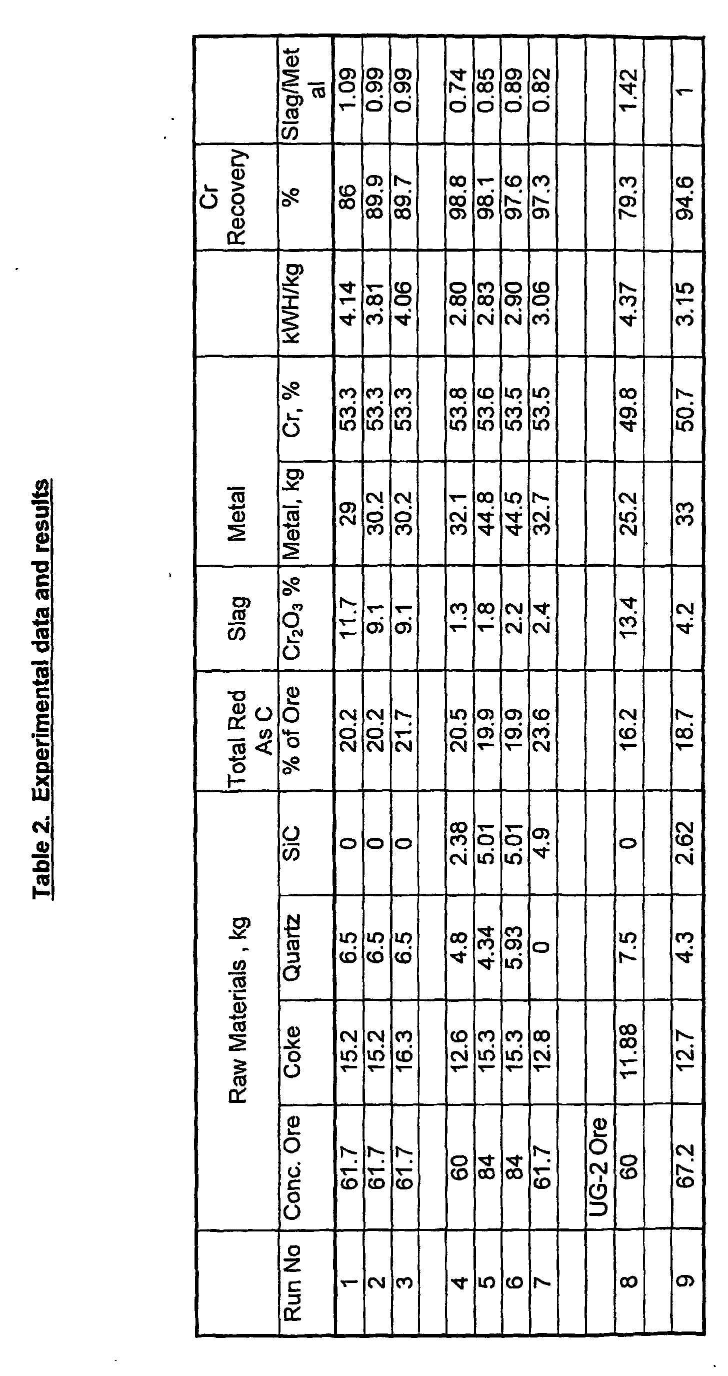

As can be seen from Table 2, the process of the invention achieves much higher chromium recoveries, not only for high grade concentrates or ores, but also for low grade ores such as UG-2 ores. Further, in relation to UG-2 ores, the chromium percent in the metal is increased from 49,8 percent to 50,7 percent when using a mixture of silicon carbide and coke. This, in commercial terms, is a significant increase.

The improved Cr recoveries using SiC are also believed to be due to the inherent capability of silicon to destroy any possible kinetic barrier formed on the surface of the chromite ore particles and the stronger reducing conditions in the furnace. The stronger reducing conditions are also due to the reduction or elimination of quartz addition into the furnace, because when SiC is used as a reductant the furnace charge becomes self fluxing. The oxygen partial pressures in equilibrium with SiC, C and Si are as follows (assuming: a_{SiO2}=0,4, P_{CO} = 1, a_{SiC}=0.9, a_{C}=0.82, a_{Si}=0.5, T=1600°C, per mole of reductant):
- Pₒ = 6.53 x 10⁻¹² atm for SiC-O equilibrium
- Pₒ = 6.00 x 10⁻¹² atm for C-O equilibrium, and
- Pₒ = 1.96 x 10⁻¹² atm for Si-O equilibrium.

When SiC is used in the furnace during the production of ferrochromium the Cr content of the slag is minimized because of the improved reduction of the ore. However, it is also envisaged that SiC can be used during a "secondary refining stage" in a standard ferrochrome operation or in conjunction with the method described above. The liquid slag would be tapped into a ladle containing a sufficient amount of SiC or, alternatively, both solid SiC and liquid slag can be poured into a ladle simultaneously to provide mixing for the reduction reactions to take place. It may be necessary to transfer the liquid slag and SiC mixture into another ladle for improved reaction rates. At the completion of the reduction reactions the ladle would be left for settling and settled metal and slag can be tapped separately or simultaneously from the ladle. From the thermodynamic calculations it is expected that the metal will be of a low C ferrochrome type with minimum silicon content and a high Cr content.

In another example of the invention, carried out on a commercial scale plant, an AC submerged arc furnace of standard and known configuration was used. The feed material introduced into the furnace consisted of a mixture of ores and fines, remelt, i.e. ferrochrome metal being recycled, kyanite (an alumina flux), silicon carbide, coke and coal. The batch mixtures were varied over a period of three days from the beginning of the tests as indicated in Table 1 below:

**TABLE 1**

| | **Batch 1** | **Batch 2** | **Batch 3** | **Batch 4** |
|---|---|---|---|---|
| Date | 14 Sept 07h00 | 15 Sept 20h00 | 16 Sept 10h00 | 16 Sept 20h00 |
| High Grade Ore | 600 kg | 600 kg | 600 kg | 600 kg |
| Medium Grade Ore | 1200 kg | 1200 kg | 1200 kg | 1200 kg |
| Inyala Fines | 200 kg | 200 kg | 200 kg | 200 kg |
| Remelt | 102 kg | 102 kg | 102 kg | 102 kg |
| Kyanite | 20 kg | 20 kg | 20 kg | 20 kg |
| SiC | 77 kg | 100 kg | 100 kg | 100 kg |
| Coke | 188 kg | 165 kg | 145 kg | 105 kg |
| Coal | 222 kg | 222 kg | 252 kg | 252 kg |

The chemical analysis of the ore grades were:

**TABLE 2**

| Material | Cr₂O₃ | FeO | SiO₂ | Al₂O₃ | MgO | CaO |
|---|---|---|---|---|---|---|
| High Grade | 44,68 | 16,4 | 8,17 | 9,95 | 14,26 | 0,42 |
| Medium Grade | 42,56 | 16,2 | 9,69 | 9,53 | 15,04 | 0,57 |
| Inyala Fines | 42,72 | 14,79 | 10,03 | 10,15 | 14,1 | 0,83 |

The furnace was operated at a temperature such that the liquidus of the slag was maintained at a temperature in the range 1650 to 1720°C with a basicity, i.e. CaO and MgO content divided by SiO₂ content, of about 0,9.

The metal phase of ferrochrome alloy produced was tapped and analysed from time to time. This analysis showed that the silicon in the metal phase increased from 1% to 6% for batches 1 to 3 while an equilibrium situation in the furnace was being established. For batch 4, the silicon content decreased to between 1,4% to 2,2%. Further, the chrome level in the metal phase reached 61,07% for batch 4 which represented an 89% chromium recovery. The maximum metal grade before introducing SiC was approximately 58 percent chrome.

It was found that the average metal output using the process of the invention was 51 tons per day which represents a 36% increase in metal production compared with use of the same furnace but without the silicon carbide/carbon-containing reductant combination. The specific energy consumption decreased from 3,4 MWh/ton to 2,67 MWh/ton.

Other improvements noticed with the use of the silicon carbide/carbon-containing reductant were a shorter tapping time, less use of oxygen lancing, better slag and metal separation, less rodding of the tap-hole and decreased gas evolution from the furnace and less gas from the stack.

Advantages of the ferrochrome production process of the invention are:
1. An increase in the furnace capacity with little or no capital outlay.
2. A considerable increase in the Cr recoveries.
3. Less gas generation, which means smaller gas plant construction for new plants and better control of off-gas in existing plants.
4. Better Si control in the metal because of less or no coke and quartz additions.
5. Can be used in any range, i.e. 100% SiC or in combination with other C sources. The slag chemistry can be adjusted by using other oxides and carbides such as CaO, MgO, Al₂O₃ and carbides of calcium, magnesium and aluminium.
6. The recycling of spent SiC refractories becomes possible.
7. Due to better Cr recoveries the exploitation of low-grade ores such as UG-2 ore is viable.
8. The SiC reductant can be used in a secondary process to recover Cr from slags.

## Claims

1. A process for producing a ferrochrome alloy including the steps of:
i. providing a material containing chromium and iron as oxides;
ii. providing a reductant which is a carbide alone or a carbide in combination with another reductant, such combination containing at least 0.5% by mass carbide;
iii. adding the reductant to the material; and
iv. smelting the material in the presence of the reductant as defined in (ii) under conditions chosen to produce a ferrochrome alloy containing no more than 6% by mass silicon, and a chromium recovery from the material of at least 70% by mass.

2. A process according to claim 1 wherein the conditions are chosen to produce a ferrochrome alloy containing no more than 4% by mass silicon.

3. A process according to claim 1 wherein the smelting conditions are chosen to produce a ferrochrome alloy containing no more than 2% by mass silicon.

4. A process according to any one of the preceding claims wherein the smelting conditions are chosen to produce a chromium recovery from the material of at least 80% by mass.

5. A process according to any one of the preceding claims wherein the material is an ore or concentrate.

6. A process according to any one of the preceding claims wherein the carbide is selected from siiicon carbide, calcium carbide, magnesium carbide and aluminium carbide.

7. A process according to any one of the preceding claims wherein the carbide is silicon carbide.

8. A process according to any one of the preceding claims wherein the reductant is a combination of a carbide and a carbon reductant.

9. A process according to claim 8 wherein the carbon reductant is selected from coke, coal, char and anthracite.

10. A process according to any one of the preceding claims wherein the reductant is silicon carbide and an additional fluxing agent is present chosen to ensure that the slag liquidus temperature during smelting is about 80 to 150°C above the ferrochrome alloy liquidus temperature.

## Patentansprüche

1. Verfahren zur Herstellung einer Ferrochromlegierung, umfassend die Schritte:
i. Zur-Verfügung-Stellen eines Materials, das Chrom und Eisen als Oxide enthält;
ii. Zur-Verfügung-Stellen eines Reduktionsmittels, das ein Carbid allein oder ein Carbid in Kombination mit einem anderen Reduktionsmittel ist, wobei eine derartige Kombination mindestens 0,5 Massen-% an Carbid enthält;
iii. Zugeben des Reduktionsmittels zu dem Material; und
iv. Schmelzen des Materials in der Gegenwart des wie in (ii) definierten Reduktionsmittels unter Bedingungen, die so gewählt werden, daß eine Ferrochromlegierung hergestellt wird, die nicht mehr als 6 Massen-% an Silicium enthält, und einer Chromrückgewinnung aus dem Material von mindestens 70 Massen-%.

2. Verfahren nach Anspruch 1, wobei die Bedingungen so gewählt werden, daß eine Ferrochromlegierung hergestellt wird, die nicht mehr als 4 Massen-% an Silicium enthält.

3. Verfahren nach Anspruch 1, wobei die Schmelzbedingungen so gewählt werden, daß eine Ferrochromlegierung hergestellt wird, die nicht mehr als 2 Massen-% an Silicium enthält.

4. Verfahren nach einem der vorherigen Ansprüche, wobei die Schmelzbedingungen so gewählt werden, daß eine Chromrückgewinnung aus dem Material von mindestens 80 Massen-% erzeugt wird.

5. Verfahren nach einem der vorherigen Ansprüche, wobei das Material ein Erz oder Konzentrat ist.

6. Verfahren nach einem der vorherigen Ansprüche, wobei das Carbid ausgewählt ist aus Siliciumcarbid, Calciumcarbid, Magnesiumcarbid und Aluminiumcarbid.

7. Verfahren nach einem der vorherigen Ansprüche, wobei das Carbid Siliciumcarbid ist.

8. Verfahren nach einem der vorherigen Ansprüche, wobei das Reduktionsmittel eine Kombination aus einem Carbid und einem Kohlenstoffreduktionsmittel ist.

9. Verfahren nach Anspruch 8, wobei das Kohlenstoffreduktionsmittel ausgewählt ist aus Koks, Kohle, künstlicher Kohle und Anthrazit.

10. Verfahren nach einem der vorherigen Ansprüche, wobei das Reduktionsmittel Siliciumcarbid ist und ein zusätzliches Flußmittel vorhanden ist, das gewählt wird, um sicherzustellen, daß die Schlackenliquidustemperatur während des Schmelzens ungefähr 80 bis 150°C über der Ferrochromlegierungsliquidustemperatur liegt.

## Revendications

1. Procédé de production d'un alliage ferrochrome comprenant les étapes de :
i. fourniture d'un matériau contenant du chrome et du fer en tant qu'oxydes ;
ii. fourniture d'un réducteur qui est un carbure seul ou un carbure combiné à un autre réducteur, une telle combinaison contenant au moins 0,5% en masse de carbure ;
iii. addition du réducteur au matériau ; et
iv. fusion du matériau en présence du réducteur tel que défini dans (ii), dans des conditions choisies pour produire un alliage ferrochrome ne contenant pas plus de 6% en masse de silicium, et une récupération de chrome à partir du matériau d'au moins 70% en masse.

2. Procédé selon la revendication 1, dans lequel les conditions sont choisies pour produire un alliage ferrochrome ne contenant pas plus de 4% en masse de silicium.

3. Procédé selon la revendication 1, dans lequel les conditions de fusion sont choisies pour produire un alliage ferrochrome ne contenant pas plus de 2% en masse de silicium.

4. Procédé selon l'une quelconque des revendications précédentes, dans lequel les conditions de fusion sont choisies pour produire une récupération de chrome à partir du matériau d'au moins 80% en masse.

5. Procédé selon l'une quelconque des revendications précédentes, dans lequel le matériau est un minerai ou un concentré.

6. Procédé selon l'une quelconque des revendications précédentes, dans lequel le carbure est choisi dans le groupe comprenant le carbure de silicium, le carbure de calcium, le carbure de magnésium et le carbure d'aluminium.

7. Procédé selon l'une quelconque des revendications précédentes, dans lequel le carbure est le carbure de silicium.

8. Procédé selon l'une quelconque des revendications précédentes, dans lequel le réducteur est une combinaison d'un carbure et d'un réducteur carboné.

9. Procédé selon la revendication 8, dans lequel le réducteur carboné est choisi parmi le coke, le charbon, le charbon de bois et l'anthracite.

10. Procédé selon l'une quelconque des revendications précédentes, dans lequel le réducteur est le carbure de silicium, et un agent fluidifiant supplémentaire est présent, choisi pour garantir que la température de liquidus du mâchefer pendant la fusion est supérieure d'environ 80° C à 150° C à la température de liquidus de l'alliage ferrochrome.
